(19) Europäisches Patentamt
European Patent Office
Office européen des brevets

(11) Numéro de publication: **0 004 489**
**B1**

(12) **FASCICULE DE BREVET EUROPEEN**

(45) Date de publication du fascicule du brevet: **06.01.82**

(51) Int. Cl.³: **C 09 K 3/34,** G 02 F 1/13

(21) Numéro de dépôt: **79400123.0**

(22) Date de dépôt: **27.02.79**

(54) **Cristal liquide de type diester, mélange de ce cristal avec une phase, mesomorphe et dispositif de visualisation utilisant ce cristal.**

(30) Priorité: **17.03.78 FR 7807799**

(43) Date de publication de la demande:
**03.10.79 Bulletin 79/20**

(45) Mention de la délivrance du brevet:
**06.01.82 Bulletin 82/1**

(84) Etats contractants désignés:
**CH DE GB IT**

(56) Documents cités:
**FR - A - 2 196 200**
**FR - A - 2 347 427**
**FR - A - 2 357 625**

(73) Titulaire: **THOMSON-CSF**
**173, Boulevard Haussmann**
**F-75360 Paris Cedex 08 (FR)**

(72) Inventeur: **Beguin, Alain**
**"THOMSON-CSF" - SCPI 173, bld Haussmann**
**F-75360 Paris Cedex 08 (FR)**
Inventeur: **Zann, Annie**
**"THOMSON-CSF" - SCPI 173, bld Haussmann**
**F-75360 Paris Cedex 08 (FR)**
Inventeur: **Dubois, Jean-Claude**
**"THOMSON-CSF" - SCPI 173, bld Haussmann**
**F-75360 Paris Cedex 08 (FR)**

(74) Mandataire: **Giraud, Pierre et al,**
**"THOMSON-CSF" - SCPI 173, bld Haussmann**
**F-75360 Paris Cedex 08 (FR)**

**EP 0 004 489 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Cristal liquide de type diester, mélange de ce cristal avec une phase mésomorphe et dispositif de visualisation utilisant ce cristal

L'invention concerne un cristal liquide de type diester, c'est-à-dire un composé organique à trois noyeau benzéniques réunis par des groupements — C O O —.

On connaît de tels composés par les publications FR A 2 347 427 et FR A 2 357 625 définis par les formules générales:

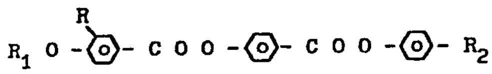

et

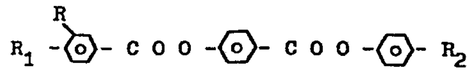

dans lesquelles $R_1$, $R_1$ O et $R_2$ désignent des groupements alkyl ou alkoxy, et R désigne un radical qui peut être soit le brome, soit un groupement nitro ou nitrile. Ces composés présentent lorsqu'ils sont à l'état de cristal liquide, une anisotropie diélectrique fortement négative mais aucune phase de type smectique.

L'invention permet d'obtenir des composés organiques qui, dans certaines conditions, présentent une phase smectique.

Les composés organiques suivant l'invention répondent à la formule générale:

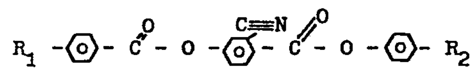

avec $R_1 = C_n H_{2n+1}$ O, n étant un entier de 1 à 10;
et $R_2 = C_m H_{2m+1}$, m étant un entier de 1 à 10.

On désigne les composés ainsi définis par la dénomination de: (n-alkoxy-4 benzoyloxy) -4 benzoyloxy) -4 cyano-2 benzoate de n-alkyl-4 phényl suivant que $R_1$ est un radical alkoxy ou alkyl.

La description qui suit porte sur le procédé général de synthèse, le mode opératoire de certaines étapes de cette synthèse et sur les propriétés d'un corps ainsi synthétisé.

*Procédé général de synthèse:*

Partant d'un acide paraalkyl (ou alkoxy) benzoïque, puis d'un acide hydroxy-4 chloro-2 benzoïque, enfin d'un alkyl-4 phénol, on réalise successivement la synthèse:

— d'un chlorure d'alkyl-4 benzoyle (réaction 1);
— d'un hydroxy-4 chloro-2 benzoate d'alkyl phényl (réaction 2);
— d'un hydroxy-4 cyano-2 benzoate d'alkyl phényl (réaction 3);
— enfin (réaction 4) du composé suivant l'invention avec les produits synthétisés aux réactions (1) et (3).

La réaction (1) est classique:

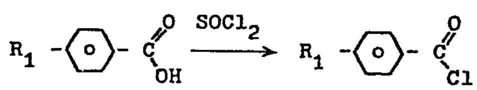


La réaction (2) a lieu dans le toluène en présence d'acide sulfurique et d'acide borique, en chauffant à reflux pendant une centaine d'heures, selon le schéma suivant:

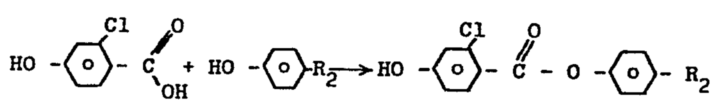

La réaction (3) a lieu dans une solution de cyanure cuivreux et de N-méthyl pyrollidone-2, en chauffant à reflux pendant quelques heures; selon le schéma suivant:

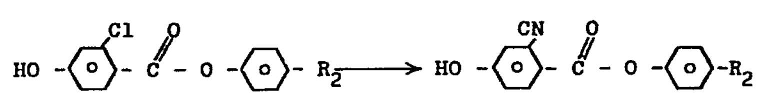

La réaction (4) a lieu à température ordinaire dans le pyridine, selon le schéma suivant:

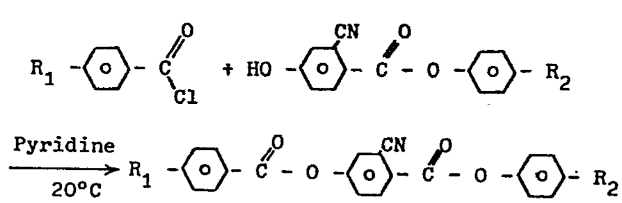

*Modes opératoires des réactions (2) à (4)*

a) *Synthèse de l'hydroxy-4 chloro-2 benzoate de n-pentyl-4 phényl:*

A 600 ml de toluène, on ajoute 17,25 g (0,1 mole) d'acide hydroxy-4 chloro-2 benzoïque, 18 g (0,11 mole) de n-pentyl-4 phénol, 0,5 g d'acide sulfonique concentré et 0,3 g d'acide borique. On porte à reflux pendant 80 à 100 heures en décantant l'eau formée au cours de la réaction. Le toluène est ensuite distillé et le produit recristallisé par deux fois dans un mélange éthanol-eau. On obtient 20,7 g de produit pur de point de fusion 150°C.

b) *Synthèse de l'hydroxy-4 cyano-2 benzoate de n-pentyl-4 phényl:*

A 20 ml de N-méthyl pyrrolidone-2 on ajoute 3,2 g (0,01 mole) d'hydroxy-4 chloro-2 benzoate de n-pentyl-4 phényl et 1,3 g de cyanure cuivreux (0,014 mole). On porte à reflux pendant 4 heures puis l'on verse la solution dans un mélange de 60 cc d'eau désionisée et 4 cc d'éthylène diamine. On acidifie ensuite cette solution à l'acide chlorhydrique 3N jusqu'à pH 4. On extrait la solution à l'éther. L'extrait éthéré est lavé à l'eau désionisée et séché sur sulfate de sodium. Le produit est purifié par chromatographie sur colonne de silice avec élution au chloroforme, puis recristallisé dans un mélange hexane / benzène. On obtient un produit pur de point de fusion 182°C.

c) *Synthèse de (n-octyl — 4 benzoyloxy)-4-cyano-2 benzoate de n-pentyl-4 phényl:*

Dans 2 ml de pyridine on dissout 85 mg ($2{,}75.10^{-4}$ mole) d'hydroxy-4 cyano-2 benzoate de n-pentyle-4 phényl. On ajoute ensuite 75 mg ($3.10^{-4}$ mole) de chlorure de n-octyl-4 benzoyle. On fait agiter à température ambiante pendant 24 heures. On verse ensuite la solution dans un mélange de 10 g de glace et 1 cc d'acide sulfurique concentré. Le produit brut est extrait au benzène puis purifié par chromatographie sur colonne de silice et recristallisation dans l'éthanol. On obtient 100 mg de produit pur, soit un rendement de 70%.

*Propriétés du corps synthétisé et d'un mélange de ce corps avec un cristal liquide nématique:*

L'exemple choisi répond à la formule:

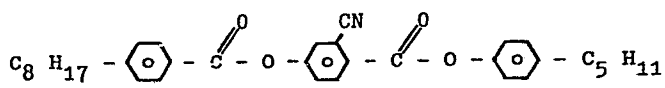
(A)

Le corps (A) a une phase cristalline solide jusqu'à son premier point de fusion à 75,5°C. Il présente une première phase mésomorphe du type smectique A dans la gamme suivante en °C:

K 75,5 $S_A$ 111

Il présente en outre une deuxième phase mésomorphe du type nématique dans la gamme suivante en °C:

111 N 115,5 I

On considère un mélange (M) contenant 10% en moles du corps (A) et 90% de para-méthoxybenzoate de parapentylphénol, désigné ci-après comme le corps (B), présentant une phase nématique de 29°C à 42°C.

On a effectué des mesures d'anisotropie diélectrique à quatre fréquences différentes du champ électrique régnant dans le cristal liquide, fréquences s'échelonnant de 1 à 1 000 kHz.

Les tableaux ci-après donnent les résultats de mesures effectuées sur le corps B (tableau 1) et le mélange M (tableau 2) dans les conditions suivantes:

— température de 26°C;

— champ magnétique d'orientation de 10 000 oersteds;

— constante diélectrique parallèle $\varepsilon_{//}$ et constante diélectrique perpendiculaire $\varepsilon_{\perp}$ mesurées à différentes fréquences N (kHz) du champ électrique; l'anisotropie diélectrique $\varepsilon$ est déduite par la formule:

$\varepsilon_a = \varepsilon_{//} - \varepsilon_{\perp}$

TABLEAU 1 (corps B)

| N (kHz) | $\varepsilon_{//}$ | $\varepsilon_{\perp}$ | $\varepsilon_a$ |
|---|---|---|---|
| 1 | 4,9 | 4,8 | + 0,1 |
| 10 | 4,9 | 4,8 | + 0,1 |
| 100 | 4,8 | 4,8 | 0 |
| 1000 | 3,7 | 4,9 | - 1,2 |

TABLEAU 2 (mélange M)

| N (kHz) | $\epsilon_{//}$ | $\epsilon_{\perp}$ | $\epsilon_a$ |
|---|---|---|---|
| 1 | 6,7 | 6,0 | + 0,7 |
| 10 | 6,4 | 6,0 | + 0,4 |
| 100 | 5,2 | 6,0 | − 0,8 |
| 1000 | 4,2 | 6,1 | − 1,9 |

On constate, comme on peut d'ailleurs le déduire des tableaux 1 et 2, que l'anisotropie diélectrique s'annule pour la fréquence, dite fréquence d'isotropie diélectrique, de 100 kHz dans le premier cas et pour une fréquence située entre 10 et 100 kHz (en fait 30 kHz) dans le second cas.

On voit que le mélange a une fréquence de relaxation plus basse que le corps B. On peut en déduire que le corps selon l'invention a une fréquence relativement basse de relaxation.

Une fréquence d'anisotropie diélectrique de 30 kHz est nettement plus basse que celle de cristaux liquides classiques comme les biphényles en phase smectique, qui est supérieure au MHz.

L'anisotropie diélectrique du corps selon l'invention, dans l'exemple choisi, passe d'une forte valeur positive à 1 kHz (de l'ordre de +6) à une forte valeur négative (de l'ordre de −8) à 100 kHz. D'une façon générale les corps selon l'invention peuvent être utilisés en mélange avec des cristaux liquides smectiques pour abaisser leur fréquence de relaxation.

L'invention est applicable à la fabrication de dispositifs de visualisation à effet de champ à mémoire à double fréquence.

## Revendications

1. Cristal liquide du type diester, présentant une phase smectique, caractérisé en ce qu'il répond à la formule chimique:

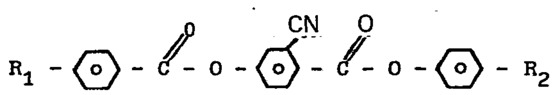

où l'on a:

$R_1=C_n H_{2n+1}$ ou $C_n H_{2n+1}$ avec un entier de 1 à 10 et $R_2=C_m H_{2m+1}$ avec m entier de 1 à 10.

2. Cristal liquide suivant la revendication 1, caractérisé en ce qu'il répond à la formule:

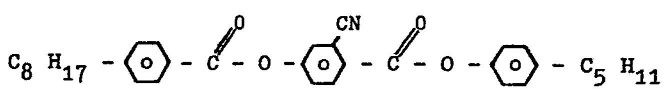

3. Mélange du cristal liquide suivant la revendication 1 avec une phase mésomorphe, caractérisé en ce qu'il est mélangé avec du paraméthoxybenzoate de parapentyl-phénol.

4. Mélange suivant la revendication 3, caractérisé en ce qu'il contient 10% en moles du corps de formule:

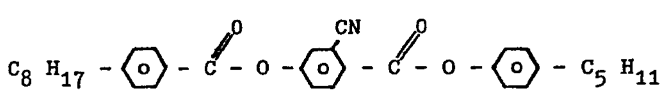

et 90% en moles de paraméthoxybenzoate de parapentyl phénol.

5. Dispositif de visualisation contenant un cristal liquide ou un mélange suivant l'une des revendications précédentes, caractérisé en ce qu'il est du type à effet de champ à mémoire à double fréquence.

## Claims

1. Liquid crystal of the type of a diester having a smectic phase, characterized in that it corresponds to the chemical formula

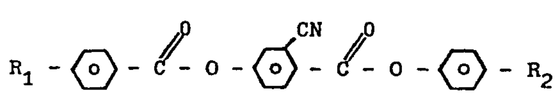

wherein:

$R_1 = C_n\,H_{2n+1}$ or $C_n\,H_{2n+1}\,O$, n being an integer from 1 to 10, and
$R_2 = C_m\,H_{2m+1}$, m being integer between 1 and 10.

2. Liquid crystal according to claim 1, characterized in that it corresponds to the formula

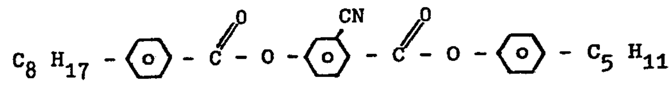

3. Mixture of the liquid crystal according to claim 1 with a mesomorphic phase, characterized in that it is mixed with para-methoxybenzoate of para-pentylphenol.

4. Mixture according to claim 3, characterized in that it contains 10 mole percent of the substance of the formula

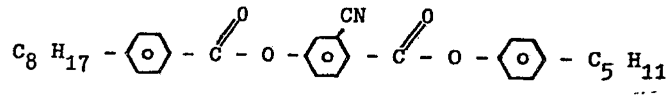

and 90 mole percent para-methoxybenzoate of parapentyl-phenol.

5. Visual display device containing a liquid crystal or a mixture according to any one of the preceding claims, characterized in that it is of the double frequency memory field-effect type.

**Patentansprüche**

1. Flüssigkristall vom Typ eines Diesters mit einer smektischen Phase, dadurch gekennzeichnet, daß er der chemischen Formel

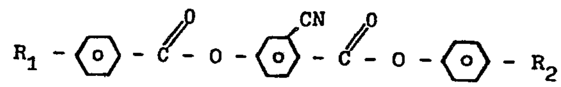

entspricht, worin:

$R_1 = C_n\,H_{2n+1}$ oder $C_n\,H_{2n+1}\,O$, wobei n eine ganze Zahl von 1 bis 10 ist und
$R_2 = C_m\,H_{2m+1}$, wobei m eine ganze Zahl von 1 bis 10 bedeutet.

2. Flüssigkristall nach Anspruch 1, dadurch gekennzeichnet, daß er der Formel

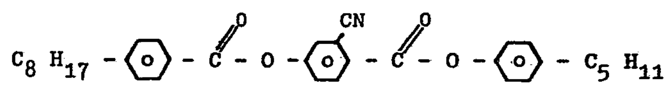

entspricht.

3. Gemisch aus dem Flüssigkristall gemäß Anspruch 1 mit einer mesomorphen Phase, dadurch gekennzeichnet, daß er mit para-Methoxybenzoat von para-Pentylphenol gemischt ist.

4. Gemisch nach Anspruch 3, dadurch gekennzeichnet, daß es 10 Mol.% des Stoffs der Formel

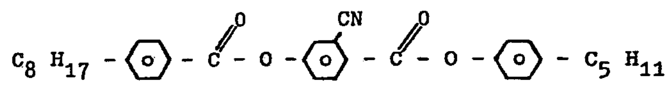

und 90% Mol.% para-Methoxybenzoat von para-Pentyl-phenol enthält.

5. Einen Flüssigkristall oder ein Gemisch gemäß einem der vorhergehenden Ansprüche enthaltende Sichtanzeige-vorrichtung, dadurch gekennzeichnet, daß sie eine mit zwei Frequenzen betriebene speichernde Feldeffekt-Sichtanzeigevorrichtung ist.